(19) Europäisches Patentamt
European Patent Office
Office européen des brevets

(11) **EP 3 780 720 A1**

(12) **EUROPEAN PATENT APPLICATION**
published in accordance with Art. 153(4) EPC

(43) Date of publication:
**17.02.2021 Bulletin 2021/07**

(21) Application number: **18913348.1**

(22) Date of filing: **05.04.2018**

(51) Int Cl.:
**H04W 28/06** (2009.01)　　　**H04W 72/04** (2009.01)

(86) International application number:
**PCT/JP2018/014641**

(87) International publication number:
**WO 2019/193730 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
• **YOSHIOKA, Shohei**
**Tokyo 100-6150 (JP)**
• **TAKEDA, Kazuki**
**Tokyo 100-6150 (JP)**
• **NAGATA, Satoshi**
**Tokyo 100-6150 (JP)**
• **WANG, Lihui**
**Beijing 100190 (CN)**

(74) Representative: **Hoffmann Eitle**
**Patent- und Rechtsanwälte PartmbB**
**Arabellastraße 30**
**81925 München (DE)**

(54) **USER TERMINAL AND WIRELESS BASE STATION**

(57) An aspect of a user terminal of the present invention includes a receiving section that receives downlink control information (DCI), and a control section that determines, based on an index included in the DCI and a number of resource blocks for a downlink shared channel or an uplink shared channel scheduled by the DCI, a transport block size (TBS) for a specific packet received by using the downlink shared channel or transmitted by using the uplink shared channel.

| $I_{MCS}$ | $N_{PRB}$ | | | |
|---|---|---|---|---|
| | 1 | 2 | ⋯ | X |
| 0 | 32 | 64 | ⋯ | xx |
| 1 | 32+8X | $\alpha=0:64$ $\alpha=1:88$ | ⋯ | ⋯ |
| ⋯ | ⋯ | ⋯ | ⋯ | ⋯ |
| 31 | 808 | 1608 | ⋯ | xxx |

FIG. 7

EP 3 780 720 A1

**Description**

Technical Field

The present invention relates to a user terminal and a radio base station in next-generation mobile communication systems.

Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). Additionally, for the purpose of achieving further broadbandization and increased speed beyond LTE, successor systems of LTE (also referred to as, for example, LTE-A (LTE-Advanced), FRA (Future Radio Access), 4G, 5G, 5G+ (plus), NR (New RAT), 3GPP Rel. 15 or later versions, and so on) have also been under study.

In existing LTE systems (for example, 3GPP Rel. 8 to Rel. 14), a user terminal (UE (User Equipment)) controls reception of a downlink shared channel (for example, PDSCH (Physical Downlink Shared Channel) based on downlink control information (DCI, also referred to as a DL assignment and so on) from a radio base station. The user terminal controls transmission of an uplink shared channel (for example, PUSCH (Physical Uplink Shared Channel), based on the DCI (also referred to as a UL grant and so on) .

In addition, in the existing LTE systems, a transport block size (TBS) table is predetermined in which the size (transport block size (TBS)) of transport blocks for each number (PRB number) of resource blocks (PRBs (Physical Resource Blocks) is associated with a TBS index. The user terminal uses the TBS table to determine the TBS.

In the existing LTE systems, the same TBS is used during initial transmission of TBs and during retransmission of TBs. With TBs retransmitted with the same TBS as that during the initial transmission, a receiving side (on a downlink, the user terminal, and on an uplink, a radio base station) can appropriately combine the TBs for the initial transmission with the TBs for the retransmission in an HARQ (Hybrid Automatic Repeat reQuest) operation.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, LTE Rel. 15 or later versions, 5G, NR, and so on), studies have been conducted regarding determination of the TBS, based on the index included in the DCI (for example, an MCS index associated with a modulation order and a target code rate) and the number of PRBs allocated to the downlink shared channel (for example, the PDSCH) or an uplink shared channel (for example, a PUSCH).

However, in the future radio communication systems, a failure to appropriately determine the TBS for a specific packet (a packet for at least one of VoIP, configured grant, message 3, and URLLC) may prevent appropriate control of reception or transmission of the specific packet using the downlink shared channel (for example, the PDSCH) or the uplink shared channel (for example, the PUSCH).

The present invention has been made in view of the above, and it is an object of the present invention to provide a user terminal and a radio base station that can appropriately control reception or transmission of a specific packet.

Solution to Problem

An aspect of a user terminal of the present invention includes a receiving section that receives downlink control information (DCI), and a control section that determines, based on an index included in the DCI and a number of resource blocks for a downlink shared channel or an uplink shared channel scheduled by the DCI, a transport block size (TBS) for a specific packet received by using the downlink shared channel or transmitted by using the uplink shared channel.

Advantageous Effects of Invention

According to the present invention, reception or transmission of a specific packet can be appropriately controlled.

Brief Description of Drawings

FIG. 1A is a diagram to show an example of an MCS table in an existing LTE system, and FIG. 1B is a diagram to show an example of a TBS table in the existing LTE system;
FIG. 2 is a diagram to show an example of an MCS table in a future radio communication system;
FIG. 3 is a diagram to show an example of a quantization table in the future radio communication system;
FIG. 4A is a diagram to show an example of a coverage reduction, and FIG. 4B is a diagram to show examples of TBSs each corresponding to an MCS index and PRBs;
FIGS. 5A and 5B are diagrams to show an example of repetition of a URLLC packet;
FIG. 6 is a diagram to show a first table example for a specific packet according to a first aspect;
FIG. 7 is a diagram to show a second table example for a specific packet according to the first aspect;
FIGS. 8A and 8B are diagrams to show a third table example for a specific packet according to the first aspect;
FIGS. 9A and 9B are diagrams to show an example of control of the size of a specific packet according to a second aspect;
FIGS. 10A and 10B are diagrams to show an example of control of the size of a specific packet according to a third aspect;
FIG. 11 is a diagram to show an example of a schematic structure of a radio communication system according to the present embodiment;
FIG. 12 is a diagram to show an example of an overall structure of a radio base station according to the present embodiment;
FIG. 13 is a diagram to show an example of a functional structure of the radio base station according to the present embodiment;
FIG. 14 is a diagram to show an example of an overall structure of a user terminal according to the present embodiment;
FIG. 15 is a diagram to show an example of a functional structure of the user terminal according to the present embodiment; and
FIG. 16 is a diagram to show an example of a hardware structure of the radio base station and the user terminal according to the present embodiment.

Description of Embodiments

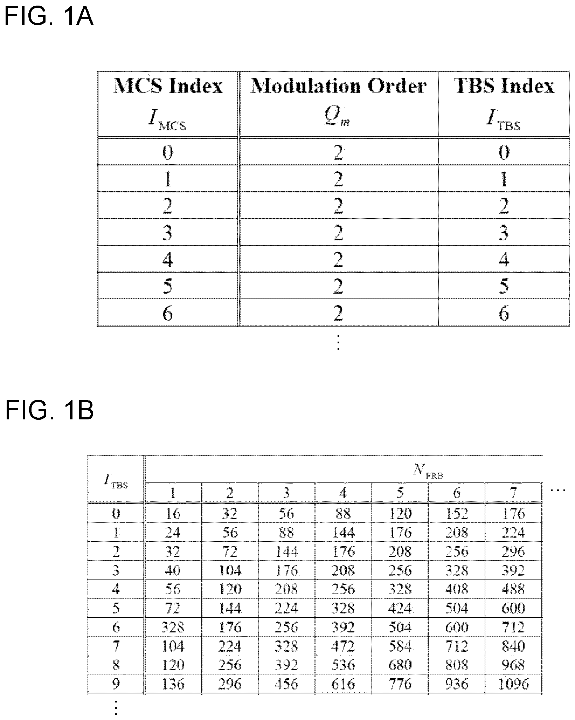

FIG. 1 is a diagram to show an example of an MCS table (FIG. 1A) and an example of a TBS table (FIG. 1B) in an existing LTE system (for example, LTE Rel. 8 to Rel. 14). As shown in FIG. 1A, the existing LTE system specifies an MCS table that associates a modulation and coding scheme (MCS) index, a modulation order, and a TBS index with one another (the MCS table is stored in a user terminal).

As shown in FIG. 1B, the existing LTE system specifies the TBS table (which is stored in a user terminal) that associates the TBS index ($I_{TBS}$) with a TBS for each PRB number ($N_{LRB}$).

In the existing LTE system, the user terminal receives DCI (DL assignment or UL grant) for scheduling the PDSCH or the PUSCH, and references the MCS table (FIG. 1A) to determine a TBS index corresponding to the MCS index included in the DCI. The user terminal references the TBS table (FIG. 1B) to determine, for the PDSCH or the PUSCH, the TBS associated with the TBS index and the number of PRBs allocated to the PDSCH or the PUSCH.

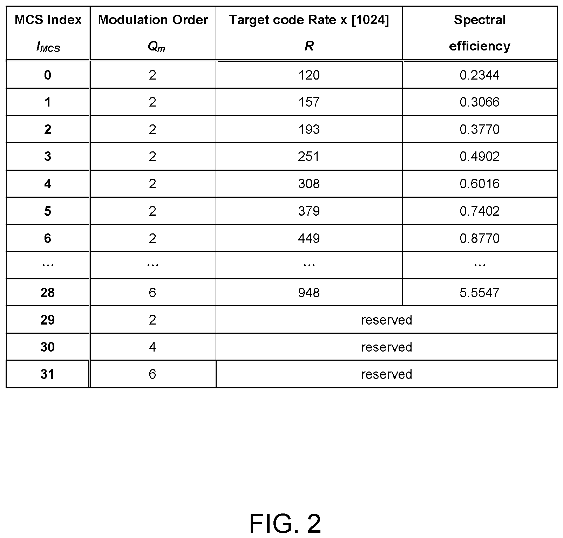

FIG. 2 is a diagram to show an example of the MCS table in the future radio communication system. Note that FIG. 2 is only illustrative and that no limitation to the shown values is intended and that some items (fields) may be deleted or items not illustrated may be added.

As shown in FIG. 2, the future radio communication system may specify a table (MCS table) that associates the modulation order, a coding rate (also referred to as an assumed coding rate, a target code rate, and so on), and an index indicating the modulation order and the coding rate (for example, the MCS index) (the table may be stored in the user terminal). Note that, in the MCS table, a spectral efficiency may be additionally associated with the above-described three items.

The user terminal may receive DCI for PDSCH scheduling (at least one of the DL assignment and DCI formats 1_0 and 1_1), and based on the MCS table (FIG. 2) and the MCS index included in the DCI, determine the modulation order (Qm) and the coding rate (R) for the PDSCH.

The user terminal may receive DCI for PUSCH scheduling (at least one of the UL grant and the DCI formats 0_0 and 0_1), and based on the MCS table (FIG. 2) and the MCS index included in the DCI, determine the modulation order (Qm) and the coding rate (R) for the PUSCH.

In the future radio communication system, the user terminal may determine the TBS by using at least one of steps 1) to 4) below. Note that steps 1) to 4) below will be described by using determination of the TBS for the PDSCH as an example but that steps 1) to 4) can also be applied to determination of the TBS for the PUSCH with "PDSCH" in steps 1) to 4) below replaced with "PUSCH."

Step 1)

The user terminal determines the number ($N_{RE}$) of REs in a slot.

Specifically, the user terminal may determine the number ($N'_{RE}$) of REs allocated to the PDSCH within one PRB. For example, based on at least one parameter shown in Equation (1) below, the user terminal may determine the number ($N'_{RE}$) of REs allocated to the PDSCH within one PRB.

Equation (1)

$$N'_{RE} = N^{RB}_{sc} \cdot N^{sh}_{symb} - N^{PRB}_{DMRS} - N^{PRB}_{oh}$$

Here, $N^{RB}_{SC}$ is the number of subcarriers per RB, and for example, $N^{RB}_{SC}$ may be $N^{RB}_{SC} = 12$. $N^{sh}_{symb}$ is the number of symbols scheduled within a slot (for example, OFDM symbols).

$N^{PRB}_{DMRS}$ is the number of REs for a DMRS per PRB during a scheduling period. The number of REs for the DMRS may include overhead of a group related to code division multiplexing (CDM) of the DMRS shown by the DCI (for example, at least one of DCI formats 1_0, 1_1, 0_0, and 0_1).

$N^{PRB}_{oh}$ may be a value configured by a higher layer parameter. For example, $N^{PRB}_{oh}$ is overhead indicated by the higher layer parameter (Xoh-PDSCH) and may have a value of 0, 6, 12, or 18. In a case where Xoh-PDSCH is not configured for (reported to) the user terminal, Xoh-PDSCH may be configured with a value of 0.

The user terminal may determine the total number ($N_{RE}$) of REs allocated to the PDSCH. The user terminal may determine the total number ($N_{RE}$) of REs allocated to the PDSCH, based on the number ($N'_{RE}$) of REs allocated to the PDSCH within one PRB and the total number ($n_{PRB}$) of PRBs allocated to the user terminal (for example, Equation (2) below).

Equation (2)

$$N_{RE} = \min\left(156, N'_{RE}\right) \cdot n_{PRB}$$

Note that the user terminal may quantize the number ($N'_{RE}$) of REs allocated to the PDSCH within one PRB in accordance with a certain rule, and based on the quantized number of REs and the total number ($n_{PRB}$) of PRBs allocated to the user terminal, determine the total number ($N_{RE}$) of REs allocated to the PDSCH.

Step 2)

The user terminal determines an intermediate number ($N_{info}$) of information bits. Specifically, the user terminal may determine the intermediate number ($N_{info}$) based on at least one parameter shown in Equation (3) below. Note that the intermediate number ($N_{info}$) may also be referred to as a temporary TBS ($TBS_{temp}$) and so on.

Equation (3)

$$N_{info} = N_{RE} \cdot R \cdot Q_m \cdot \upsilon$$

Here, $N_{RE}$ is the total number of REs allocated to the PDSCH. R is a coding rate associated with the MCS index included in the DCI in the MCS table (for example, FIG. 2). $Q_m$ is a modulation order associated with the MCS index included in the DCI in the MCS table. $\upsilon$ is the number of layers of the PDSCH.

Step 3)

In a case where the intermediate number ($N_{info}$) of information bits determined in step 2) is not more than (or less than) a certain threshold (for example, 3824), the user terminal may quantize the intermediate number to determine a quantized intermediate number (N'info). The user terminal may compute the quantized intermediate number (N'info) by using, for example, Equation (4).

Equation (4)

$$N'_{info} = \max\left(24, 2^n \cdot \left\lfloor \frac{N_{info}}{2^n} \right\rfloor\right)$$

where $n = \max\left(3, \left\lfloor \log_2(N_{info}) \right\rfloor - 6\right)$

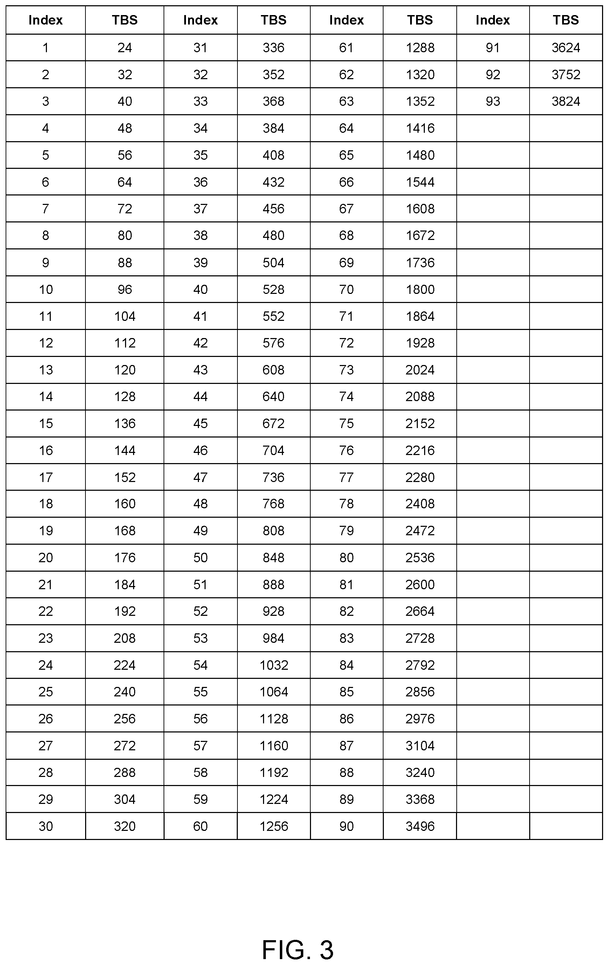

The user terminal may find the closest TBS not less than the quantized intermediate number (N'info) by using a certain table (for example, a table that associates the TBS with the index as shown in FIG. 3 (also referred to as a quantization table, a TBS table, or the like)).

Step 4)

In a case where the intermediate number ($N_{info}$) of information bits determined in step 2) is more than (or not less than) the certain threshold (for example, 3824), the user terminal may quantize the intermediate number ($N_{info}$) to determine the quantized intermediate number (N'info). The user terminal may compute the quantized intermediate number (N'info) by using, for example, Equation (5). Note that a round function may perform rounding up.

Equation (5)

$$N'_{info} = \max\left(3840, 2^n \times round\left(\frac{N_{info} - 24}{2^n}\right)\right)$$

where $n = \left\lfloor \log_2(N_{info} - 24) \right\rfloor - 5$

Here, in a case where the coding rate (R) associated, in the MCS table (for example, FIG. 2), with the MCS index in the DCI is not more than (or less than) a certain threshold (for example, 1/4), the user terminal may determine the TBS, based on at least one parameter shown in Equation (6) below (for example, by using Equation (6)).

Equation (6)

$$TBS = 8 \cdot C \cdot \left\lceil \frac{N'_{info} + 24}{8 \cdot C} \right\rceil - 24 \quad \text{where} \quad C = \left\lceil \frac{N'_{info} + 24}{3816} \right\rceil$$

N'info is the quantized intermediate number, and may be computed, for example, by using Equation (5) above. C may be the number of code blocks (CB) into which a TB is divided.

On the other hand, in a case where the coding rate (R) is more than (or not less than) the certain threshold (for example, 1/4) and the quantized intermediate number (N'info) of information bits is more than (or not less than) the certain threshold (for example, 8424), the user terminal may determine the TBS, based on at least one parameter shown in Equation (7) below (for example, by using Equation (7)).

Equation (7)

$$TBS = 8 \cdot C \cdot \left\lceil \frac{N'_{info} + 24}{8 \cdot C} \right\rceil - 24 \quad \text{where} \quad C = \left\lceil \frac{N'_{info} + 24}{8424} \right\rceil$$

In a case where the coding rate (R) is not more than (or less than) the certain threshold (for example, 1/4) and the quantized intermediate number (N'info) is not more than (or less than) the certain threshold (for example, 8424), the user terminal may determine the TBS based on at least one parameter shown in Equation (8) below (for example, by using Equation (8)).

Equation (8)

$$TBS = 8 \cdot \left\lceil \frac{N'_{info} + 24}{8} \right\rceil - 24$$

As described above, for the future radio communication systems, studies have been conducted regarding the user terminal determining the intermediate number ($N_{info}$) of information bits, based on at least one of the number ($N_{RE}$) of REs available for the PDSCH or the PUSCH within a slot, the coding rate (R), the modulation order (Qm), and the layer number and determining the TBS for the PDSCH or the PUSCH, based on the intermediate number (N'info) obtained by quantizing the intermediate number ($N_{info}$).

However, in a case where the TBS is determined as described above, a failure to appropriately determine the TBS for a specific packet (at least one of VoIP, configured grant, message 3, and URLLC) may prevent appropriate control of reception or transmission of the specific packet using the downlink shared channel (for example, the PDSCH) or the uplink shared channel (for example, the PUSCH).

Here, the specific packet (also referred to as information, data, a message, or the like) may include at least one of user data and higher layer control information transmitted on the PDSCH or the PUSCH. For example, the specific packet may include at least one of the following:

- Voice data (also referred to as VoIP (Voice over Internet Protocol), a voice packet, and so on)
- Scheduling information configured by a higher layer (configured grant or configured UL grant)
- Higher layer (L2/L3) control message (message 3) transmitted by the user terminal in accordance with a random access response (RAR or message 2) from the radio base station in a random access procedure
- Ultra reliable and low latency (for example, URLLC (Ultra Reliable and Low Latency Communications) data

As described above, in a case where the intermediate number ($N_{info}$) of information bits is not more than (or less than) the certain threshold (for example, 3824), the user terminal finds the closest TBS not less than the quantized intermediate number (N'info) by using the quantization table (for example, FIG. 3). However, the use of a TBS more than the desired TBS may result in an increased coding rate and a reduced coverage.

- VoIP

For example, for the VoIP, a specific TBS (for example, TBS = 328) is desired, but the quantization table shown in FIG. 3 does not specify 328. Thus, in the quantization table shown in FIG. 3, the closest TBS not less than 328 (= 336) is found.

With the same MCS index (see FIG. 2) and the same number of PRBs allocated to the user terminal, the coding rate is said to increase consistently with TBS. The coverage may decrease with increasing coding rate.

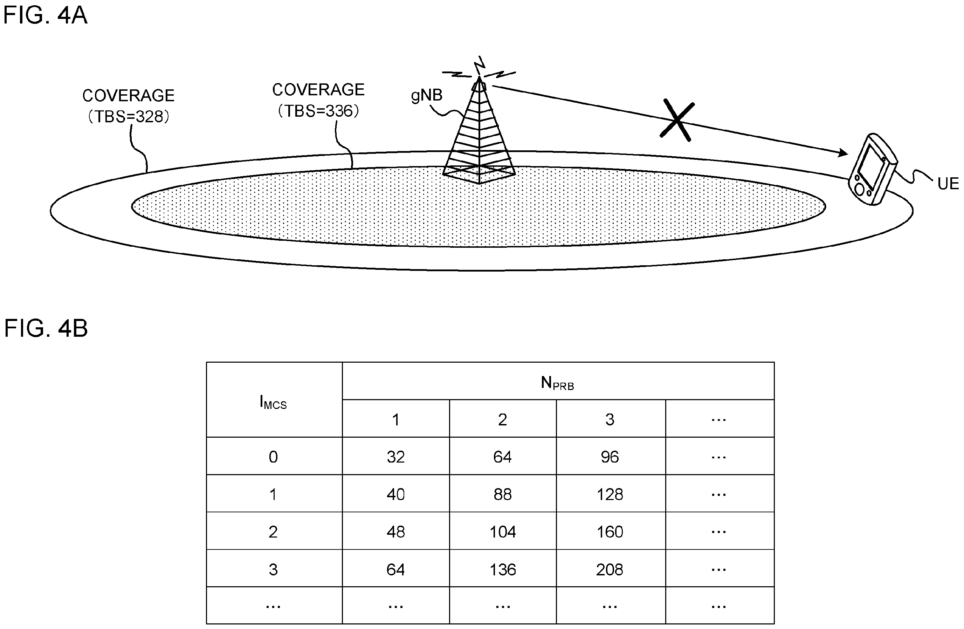

Thus, as shown in FIG. 4A, when TBS = 336 is used in a case where the desired TBS is 328, the coverage at TBS = 336 is smaller than the coverage at TBS = 328. As a result, the user terminal (UE) may fail to appropriately make VoIP communication with the radio base station (gNB (gNodeB) or eNB (eNodeB).

FIG. 4B shows examples of TBSs for respective combinations of the MCS index ($I_{MCS}$) and the number of PRBs ($N_{PRB}$) determined based on certain parameter values (for example, $N^{sh}_{symb}$ = 14, $N^{PRB}_{DMRS}$ = 24, $N^{PRB}_{oh}$ = 0, and v = 1). Note that the certain parameter values are not limited to the $N^{sh}_{symb}$, the $N^{PRB}_{DMRS}$, the $N^{PRB}_{oh}$, and the v and that the value of at least one of the parameters shown in Equations (1) to (8) above is sufficient.

In the future radio communication systems, the combination of the MCS index ($I_{MCS}$) and the number of PRBs ($N_{PRB}$) from which the specific TBS is derived varies according to a certain parameter value. Thus, in a case where the derivation of the specific TBS (for example, 336) limits the selectable MCS indexes ($I_{MCS}$) to those which correspond to at least one of a lower modulation order (for example, 2 (= QPSK (Quadrature Phase Shift Keying) and a lower coding rate, the coverage may decrease.

- Message 3

For the message 3, a specific TBS (for example, 56) is desired. Here, the quantization table shown in FIG. 3 specifies 56, but it is assumed that the 56 may be unavailable depending on a certain parameter value (the value of at least one of the parameters shown in Equations (1) to (8) above).

In this case, utilization of a larger TBS (for example, 64) increases the coding rate. The coverage may decrease with increasing coding rate.

The certain parameter value (the value of at least one of the parameters shown in Equations (1) to (8) above) from which the specific TBS (for example, 56) can be derived is limited. Thus, for the future radio communication systems, as a TBS available for the message 3, the specific TBS (for example, 56) may need to be taken into account, and forward compatibility may decrease.

- URLLC

The URLLC supports repetition of data (packet) for the URLLC before transmission confirmation information (HARQ-ACK (Hybrid Automatic Repeat reQuest-Acknowledge) is fed back.

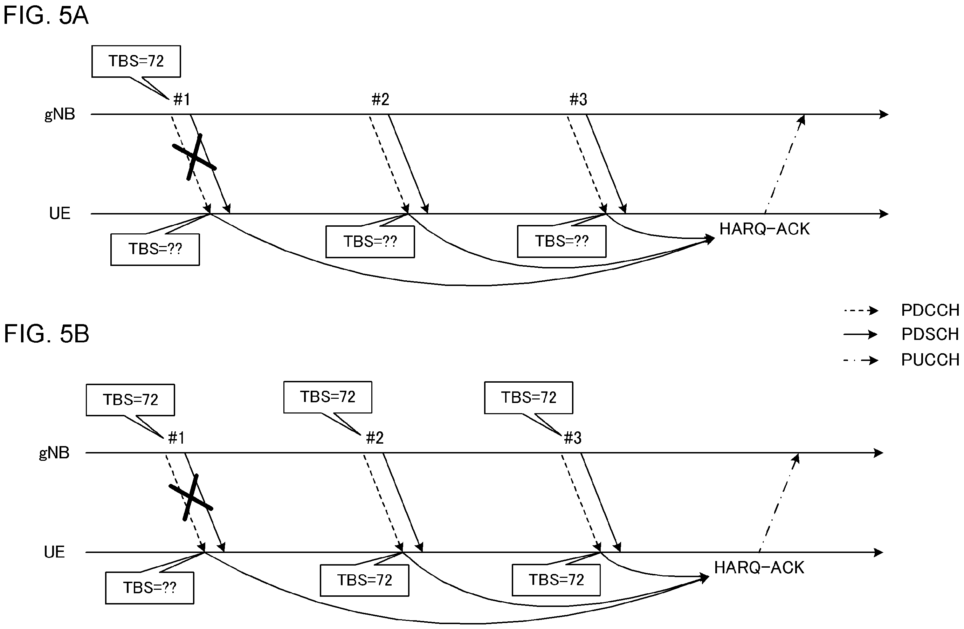

FIGS. 5A and 5B are diagrams to show an example of repetition of data for URLLC. In FIGS. 5A and 5B, the radio base station (gNB) does not know whether the user terminal (UE) has correctly detected the PDCCH for initial transmission. Thus, the radio base station selects the MCS index ($I_{MCS}$) and the number of PRBs ($N_{PRB}$) for retransmission from among candidates for the combination of the MCS index ($I_{MCS}$) and the number of PRBs ($N_{PRB}$) from which the same TBS as that for the initial transmission can be derived.

In a case of successfully detecting the PDCCH (DCI) during the initial transmission, the user terminal can determine the TBS, based on the DCI transmitted by the PDCCH. In this case, for the retransmitted data, the radio base station can freely configure the MCS index ($I_{MCS}$) and the number of PRBs ($N_{PRB}$) regardless of the TBS.

On the other hand, as shown in FIG. 5A, in a case of failing to detect the PDCCH (DCI) during the initial transmission, the user terminal is prevented from determining the TBS. Thus, as shown in FIG. 5B, it is assumed that information from which the user terminal can derive the TBS is included in the DCI transmitted by the PDCCH not only during the initial transmission but also during the retransmission.

However, in a case of FIG. 5B, for the retransmitted data, the radio base station needs to select the MCS index ($I_{MCS}$) and the number of PRBs ($N_{PRB}$) from which the same TBS as that for the initial transmitted data can be derived. Thus, the selectable MCS indexes ($I_{MCS}$) are restricted depending on the certain parameter value (the value of at least one of the parameters shown in Equations (1) to (8)), and as a result, for example, the coverage may decrease in a case where a lower-order MCS index fails to be selected.

In a case where the TBS is determined by using the procedure of steps 1) to 4) described above, at least one of the desired TBS, the desired MCS, and the desired PRB may be unavailable for the specific packet. As a result, the coverage may decrease. The forward compatibility may decrease.

Thus, the inventors of the present invention studied methods for appropriately determining the TBS for the specific packet and came up with the present invention.

The present embodiment will be described below in detail. In the present embodiment, the user terminal determines, based on the index included in the DCI and the number of PRBs of the downlink shared channel (for example, the PDSCH) or the uplink shared channel (for example, the PUSCH) scheduled by the DCI, the transport block size (TBS) for the specific packet received by using the downlink shared channel or transmitted by using the uplink shared channel.

As the index included in the DCI, the MCS index (FIG. 2) is hereinafter illustrated, which is associated with the modulation order and the target code rate, but no such limitation is intended. Note that the determination procedure for the TBS for the specific packet, which will be described below, is applicable not only to the user terminal but also to the radio base station.

The specific packet is hereinafter assumed to be at least one of, for example, the VoIP, configured grant, message 3, and URLLC, but no such limitation is intended. It is sufficient that the specific packet is a packet of a predetermined type.

In the following, the TBSs for the packets other than the specific packet are determined by using steps 1) to 4) described above, but at least a part of steps 1) to 4) described above may be changed.

(First Aspect)

In a first aspect, in a case where the specific packet is received or transmitted, the user terminal may determine the TBS for the specific packet without using steps 1) to 4) described above.

Specifically, in a case where the specific packet is received or transmitted, the user terminal may determine the TBS for the specific packet by using a table that specifies a TBS corresponding to an MCS index and the number of PRBs.

On the other hand, in a case where the specific packet is not received or transmitted (a packet other than the specific packet is received or transmitted), the TBS may be determined by using steps 1) to 4) described above.

<First Table Example>

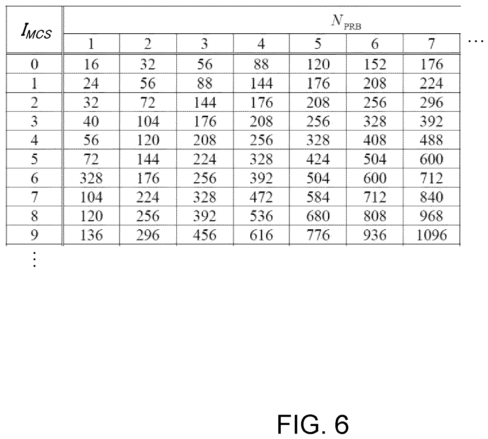

FIG. 6 is a diagram to show a first table example for a specific packet according to the first aspect. As shown in FIG. 6, in the first table example, the TBS table specified in the existing LTE systems (for example, 3GPP Rel. 8 to Rel. 14) may be reused for determination of the TBS for the specific packet. The reuse of the existing TBS allows implementation to be facilitated.

As shown in FIG. 1B, the TBS table in the existing LTE systems specifies a TBS corresponding to the TBS index and the number of PRBs. On the other hand, in the first table example, as shown in FIG. 6, the TBS index may be replaced with the MCS index associated with the modulation order and the target code rate.

In a case where the specific packet is received or transmitted, the user terminal may acquire, from the table shown in FIG. 6, a TBS corresponding to the MCS index included in the DCI and the number of PRBs for the PDSCH or the PUSCH scheduled by the DCI.

<Second Table Example>

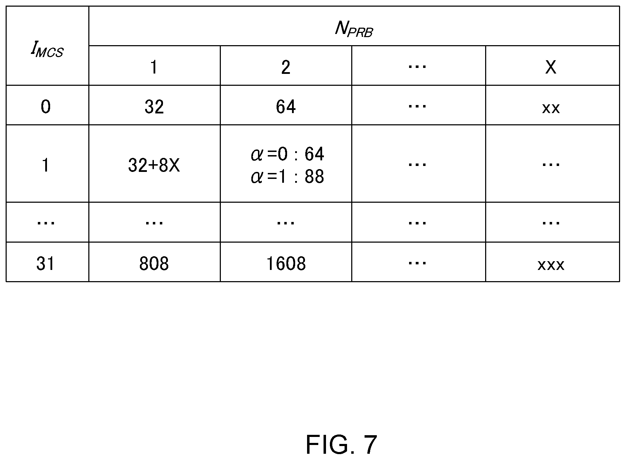

FIG. 7 is a diagram to show a second table example for the specific packet according to the first aspect. As shown in FIG. 7, in the second table example, a table that specifies a TBS corresponding to the MCS index and the number of PRBs may be newly specified for determination of the TBS for the specific packet. Specifying the new table allows determination of the TBS more suitable for a specific packet.

As shown in FIG. 7, the table may be a single table that specifies one or more TBSs corresponding to the MCS index and the number of PRBs. The TBS may be controlled by a certain parameter (for example, at least one of a maximum PRB number X and $\alpha$ or the like).

For example, in FIG. 7, in a case of the MCS index = 1, the TBS corresponding to the number of PRBs = 1 is specified as 32 + 8X. In a case of the MCS index = 1, the TBS corresponding to the number of PRBs = 2 is controlled to one of 64 or 88 depending on the value of the certain parameter $\alpha$.

In a case shown in FIG. 7, in a case where the specific packet is received or transmitted, the user terminal may select, based on the certain parameter $\alpha$, one of a plurality of TBSs corresponding to the MCS index included in the DCI (for example, 1) and the number of PRBs for the PDSCH or the PUSCH scheduled by the DCI (for example, 2).

The certain parameter $\alpha$ may be determined based on at least one of the DCI and the higher layer signaling. The higher layer signaling may be at least one of, for example, RRC (Radio Resource Control) signaling, broadcast information (for example, MIBs (Master Information Blocks), and system information (for example, SIBs (System Information Blocks), RMSI (Remaining Minimum System Information), OSI (Other System Information), and so on).

<Third Table Example>

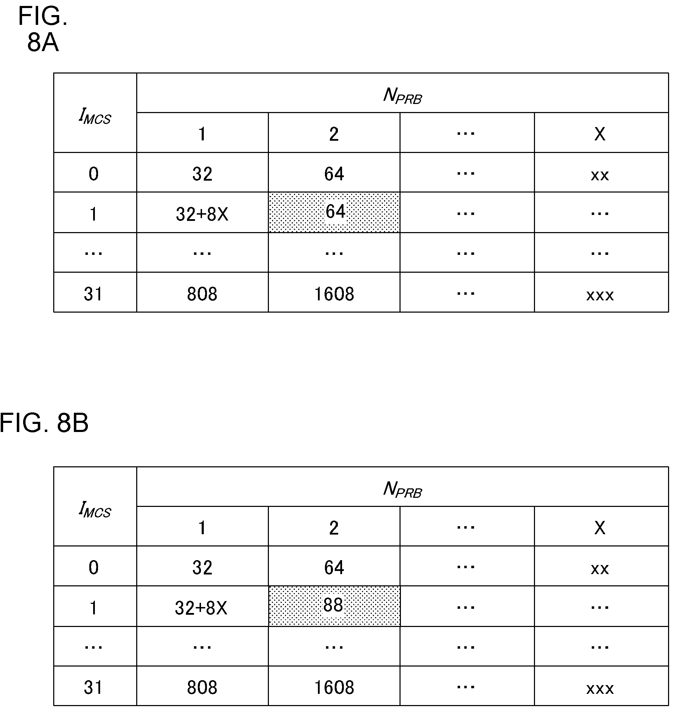

FIGS. 8A and 8B are diagrams to show a third table example for the specific packet according to the first aspect. As shown in FIGS. 8A and 8B, in the third table example, a TBS table that specifies a TBS corresponding to the MCS index and the number of PRBs may be newly specified for determination of the TBS for the specific packet. Specifying the new table allows determination of the TBS more suitable for a specific packet.

As shown in FIGS. 8A and 8B, a plurality of tables may be provided that determine the same TBS or different TBSs corresponding to the MCS index and the number of PRBs. For example, FIGS. 8A and 8B show two tables showing different TBSs corresponding to the MCS index = 1 and the number of PRBs = 2.

The user terminal may use a table selected from the plurality of tables based on a certain parameter to determine the TBS for the specific packet. The certain parameter may be determined based on at least one of the DCI and the higher layer signaling.

<Judgment of TBS Determination Procedure>

Whether the user terminal uses steps 1) to 4) described above to determine the TBS or not (in other words, whether the specific packet is received or transmitted or not) may be explicitly indicated by using at least one of the higher layer signaling and the DCI, or may be implicitly indicated. The explicit indication allows flexible control of whether steps 1) to 4) described above are used to determine the TBS or not. The implicit adjustment allows flexible control of whether steps 1) to 4) described above are used to determine the TBS without any additional overhead or not.

- Explicit indication

In a case where a certain higher layer parameter (for example, TBSdeterminationfromtable) is configured, the user terminal may use the table according to the first aspect to determine the TBS for the specific packet without using steps 1) to 4) described above.

Alternatively, based on turn-on or -off (enabled or disabled, 0 or 1) of the certain higher layer parameter (for example, TBSdeterminationfromtable) and the certain field value in the DCI, the user terminal may control whether or not to use the table according to the first aspect instead of steps 1) to 4) described above to determine the TBS for the specific packet.

Alternatively, based on the certain field value in the DCI, the user terminal may control whether or not to use the table according to the first aspect instead of steps 1) to 4) described above to determine the TBS for the specific packet.

- Implicit indication

Based on a traffic profile (traffic type), the user terminal may control whether or not to use the table according to the first aspect instead of steps 1) to 4) described above to determine the TBS for the specific packet. The traffic profile may be indicated from a higher layer to the physical layer.

Alternatively, based on at least one of the parameters below, the user terminal may control whether or not to use the table according to the first aspect instead of steps 1) to 4) described above to determine the TBS for the specific packet. The traffic profile may be indicated from a higher layer to the physical layer.

- DCI format
- Search space
- Aggregation level
- Monitoring occasion for the PDDCH
- Transmission duration
- RNTI (Radio Network Temporary Identifier) for scrambling
- MCS index
- Resource allocation (RA) type
- Waveform
- Subcarrier spacing (SCS)
- Configured grant type

Alternatively, in a case where the specific packet (transport block) is at least one of the packets for the VoIP, configured grant, message 3, and URLLC, the user terminal may control whether or not to use the table according to the first aspect instead of steps 1) to 4) described above to determine the TBS for the specific packet.

In the first aspect, in a case where the specific packet is received or transmitted, the TBS for the specific packet is determined by using the table that specifies a TBS corresponding to the MCS index and the number of PRBs. Thus, at least one of the desired TBS, the desired MCS, and the desired PRB can also be utilized for the specific packet.

(Second Aspect)

In a second aspect, in a case where the specific packet is received or transmitted, the user terminal may control the size of the specific packet (for example, zero padding), based on the TBS determined by using steps 1) to 4) described above.

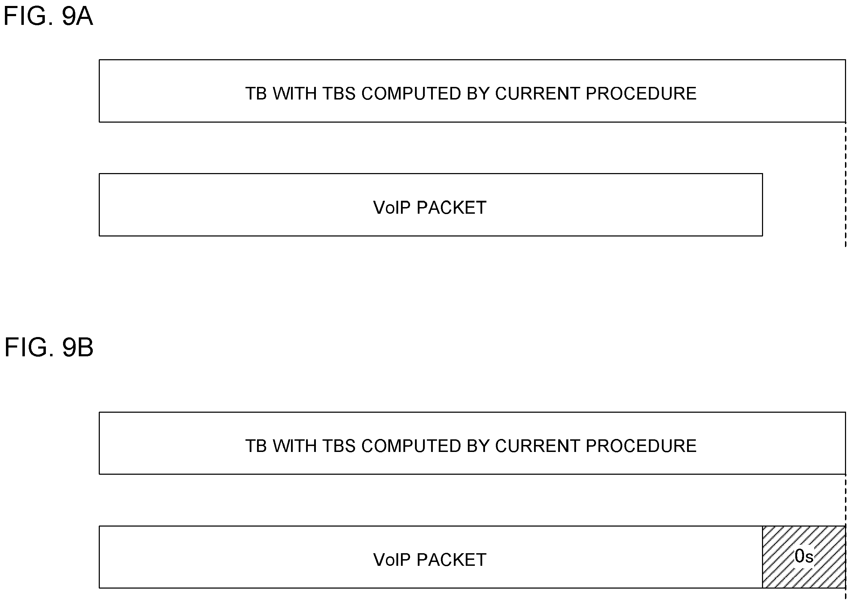

FIGS. 9A and 9B are diagrams to show an example of control of the size of the specific packet according to the second aspect. Note that FIG. 9A and FIG. 9B show an example in which the specific packet is for the VoIP but that the specific packet is not limited to this as described above.

FIG. 9A shows that the TBS determined by using steps 1) to 4) described above is larger the size of the VoIP packet. In this case, as shown in FIG. 9B, the user terminal may add padding bits (for example, 0) to the VoIP packet, based on the determined TBS.

The padding bits may be inserted into the specific packet (for example, VoIP) (transport block) in a localized manner or a distributed manner. The localized insertion facilitates implementation. On the other hand, the distributed insertion improves performance in terms of channel coding.

In a case of the localized insertion, the padding bits may be inserted into a header or a tail of the specific packet.

The padding bits may be inserted until the size of the specific packet is equal to a certain TBS. The certain TBS may be one of the following. One of the following allows selection of the optimum TBS meeting requirements.

- Closest TBS determined by using steps 1) to 4) described above
- TBS selected from a plurality of TBSs by using steps 1) to 4) (for example, the closest TBS)
- TBS selected from a plurality of TBSs from which at least a certain number of combinations of the MCS index and the number of PRBs can be derived (for example, the closest TBS)

In the second aspect, even in a case where the specific packet is received or transmitted, the user terminal can determine the TBS for the specific packet by using steps 1) to 4) described above.

(Third Aspect)

In a third aspect, in a case where the specific packet is received or transmitted, the user terminal may adjust, based on the size of the specific packet, the TBS determined by using steps 1) to 4) described above.

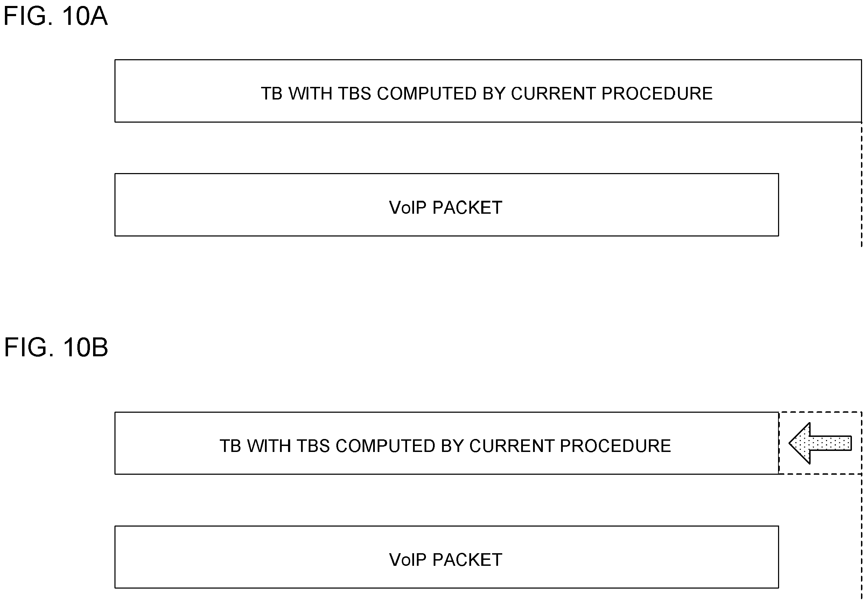

FIGS. 10A and 10B are diagrams to show an example of adjustment of the TBS according to the third aspect. Note that, with reference to FIG. 10A and FIG. 10B, differences from FIG. 9A and FIG. 9B will be mainly described.

FIG. 10A shows that the TBS determined by using steps 1) to 4) described above is larger the size of the VoIP packet. In this case, as shown in FIG. 10B, the determined TBS may be adjusted (for example, the determined TBS may be reduced), based on the size of the VoIP packet.

The adjustment of the TBS may be performed explicitly or implicitly. The explicit adjustment may be performed based on at least one of the higher layer signaling and the DCI.

- Explicit adjustment

In a case where a certain higher layer parameter (for example, TBSadjustment) is configured, the user terminal may adjust, based on the size of the specific packet, the TBS determined by using steps 1) to 4) described above.

Alternatively, based on at least one of turn-on or -off (enabled or disabled, 0 or 1) of the certain higher layer parameter (for example, TBSadjustment), the value of the higher layer parameter (for example, TBSadjustment = {0, 8, 16}), and the certain field value in the DCI, the user terminal may adjust, based on the size of the specific packet, the TBS determined by using steps 1) to 4) described above.

Alternatively, based on the certain field value in the DCI, the user terminal may adjust, based on the size of the specific packet, the TBS determined by using steps 1) to 4) described above.

- Implicit adjustment

Based on at least one of the parameters below, the user terminal may adjust, based on the size of the specific packet, the TBS determined by using steps 1) to 4) described above.

- DCI format
- Search space
- Aggregation level
- Monitoring occasion for the PDDCH
- Transmission duration
- RNTI (Radio Network Temporary Identifier) for scrambling
- MCS index
- Resource allocation (RA) type
- Waveform
- Subcarrier spacing (SCS)
- Configured grant type

Alternatively, based on the number of available combinations of the MCS index and the number of PRBs, the user terminal may adjust, based on the size of the specific packet, the TBS determined by using steps 1) to 4) described above.

In the third aspect, even in a case where the specific packet is received or transmitted, the user terminal can determine the TBS for the specific packet by using steps 1) to 4) described above. Note that the above-described explicit adjustment allows flexible control of whether to adjust the size of the TBS or not. The implicit adjustment allows the size of the TBS to be adjusted without any additional overhead.

(Radio Communication System)

Hereinafter, a structure of a radio communication system according to the present embodiment will be described. In this radio communication system, radio communication methods according to the above-described aspects are employed. Each of the radio communication methods according to the above-described aspects may be employed independently, or at least two of the radio communication methods may be employed in combination.

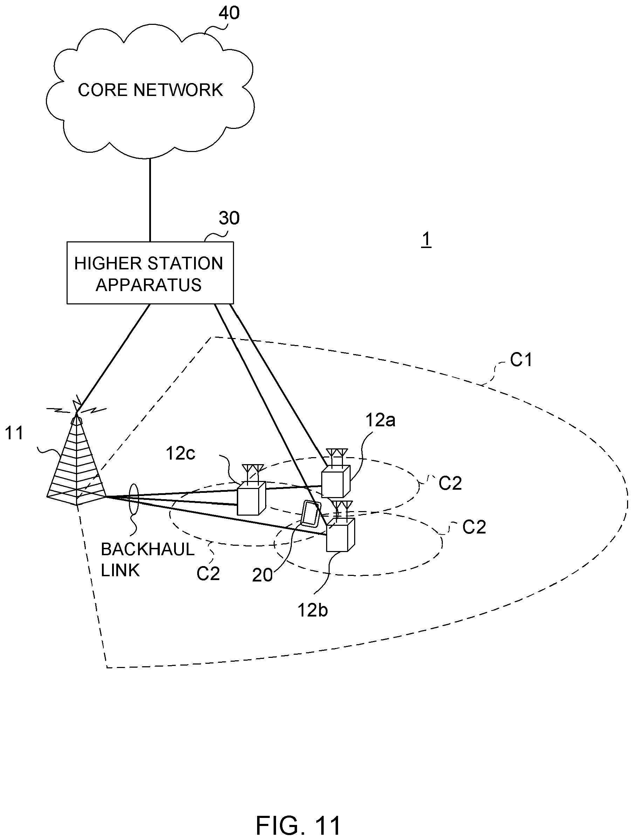

FIG. 11 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit. Note that the radio communication system 1 may also be referred to as SUPER 3G, LTE-A (LTE-Advanced), IMT-Advanced, 4G, 5G, FRA (Future Radio Access), NR (New RAT (New Radio Access Technology), and so on.

The radio communication system 1 shown in FIG. 11 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. Different numerologies may be employed between cells and/or within a cell.

Here, the numerology refers to a communication parameter in a frequency direction and/or a time direction (at least one of, for example, an interval of subcarriers (subcarrier spacing), a bandwidth, a symbol length, a CP time length (CP length), a subframe length, a TTI time length (TTI length), the number of symbols per TTI, a radio frame structure, a filter processing, windowing processing, and so on). In the radio communication system 1, a subcarrier spacing of, for example, 15 kHz, 30 kHz, 60 kHz, 120 kHz, 240 kHz, and so on may be supported.

The user terminals 20 can connect with both the radio base station 11 and the radio base stations 12. It is assumed that the user terminals 20 use the macro cell C1 and the small cells C2 at the same time by means of CA or DC; the macro cell C1 and the small cells C2 use different frequencies. The user terminals 20 can employ CA or DC by using a plurality of cells (CCs) (for example, two or more CCs). The user terminal can utilize a licensed band CC and an unlicensed band CC as the plurality of cells.

The user terminals 20 can perform communication by using time division duplex (TDD) or frequency division duplex (FDD) in each cell. A TDD cell and an FDD cell may be referred to as a TDD carrier (frame configuration type 2), an FDD carrier (frame configuration type 1), respectively, for example.

Furthermore, in each cell (carrier), a single numerology may be employed, or a plurality of different numerologies may be employed.

Between the user terminals 20 and the radio base station 11, communication can be carried out by using a carrier of a relatively low frequency band (for example, 2 GHz) and a narrow bandwidth (referred to as, for example, an "existing carrier," a "Legacy carrier" and so on). On the other hand, between the user terminals 20 and the radio base stations 12, a carrier of a relatively high frequency band (for example, 3.5 GHz, 5 GHz, 30 to 70 GHz, and so on) and a wide bandwidth may be used, or the same carrier as that used between the user terminals 20 and the radio base station 11 may be used. Note that the structure of the frequency band for use in each radio base station is by no means limited to these.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may include, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "gNB (gNodeB)," a "transmitting/receiving point (TRP)" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "eNB," "gNB," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE, LTE-A, 5G, 5G+, NR, Rel. 15 or later versions and may include not only mobile communication terminals but stationary communication terminals. The user terminal 20 can perform device-to-device communication (D2D) with another user terminal 20.

In the radio communication system 1, as radio access schemes, OFDMA (orthogonal frequency division multiple access) is applied to the downlink (DL), and SC-FDMA (single carrier frequency division multiple access) is applied to the uplink (UL). OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these and that OFDMA may be used for the UL.

The radio communication system 1 may use a multicarrier waveform (for example, an OFDM waveform) or a single carrier waveform (for example, a DFT-s-OFDM waveform).

In the radio communication system 1, the following are used as downlink (DL) channels: a DL shared channel (PDSCH (Physical Downlink Shared Channel, also referred to as a downlink data channel and so on), which is used by each user terminal 20 on a shared basis, a broadcast channel (PBCH (Physical Broadcast Channel)), L1/L2 control channels and so on. User data, higher layer control information, SIBs (System Information Blocks) and so on are communicated on the PDSCH. The MIBs (Master Information Blocks) are communicated on the PBCH.

The downlink L1/L2 control channels include a downlink control channel (a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and PUSCH scheduling information, and so on are communicated on the PDCCH. The number of OFDM symbols to use for the PDCCH is communicated on the PCFICH. The EPDCCH is frequency-division multiplexed with the PDSCH and used to communicate DCI and so on, like the PDCCH. At least one of the PHICH, PDCCH, and EPDCCH can be used to transmit HARQ transmission confirmation information (ACK/NACK) for the PUSCH.

In the radio communication system 1, the following are used as uplink (UL) channels: an uplink shared channel (PUSCH (Physical Uplink Shared Channel), also referred to as an uplink data channel and so on), which is used by each user terminal 20 on a shared basis, an uplink control channel (PUCCH (Physical Uplink Control Channel)), a random access channel (PRACH (Physical Random Access Channel)) and so on. User data and/or higher layer control information are communicated on the PUSCH. The PUSCH or the PUCCH transmits uplink control information (UCI) including at least one of downlink (DL) signal transmission confirmation information (A/N), channel state information (CSI), and so on. By means of the PRACH, random access preambles for establishing connections with cells are communicated.

<Radio Base Station>

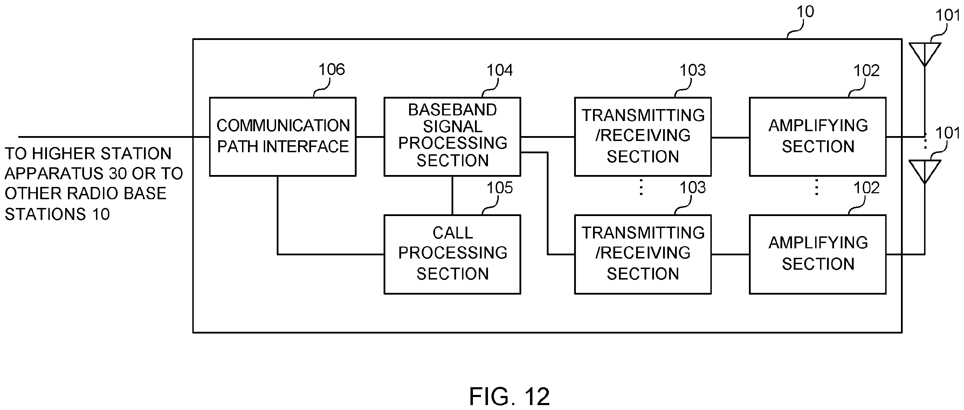

FIG. 12 is a diagram to show an example of an overall structure of the radio base station according to the present embodiment. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may include one or more transmitting/receiving antennas 101, one or more amplifying sections 102, and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processing, such as PDCP (Packet Data Convergence Protocol) layer processing, division and coupling of the user data, RLC (Radio Link Control) layer transmission processing such as RLC retransmission control, MAC (Medium Access Control) retransmission control (for example, HARQ (Hybrid Automatic Repeat reQuest) transmission processing), scheduling, transport format selection, channel coding, inverse fast Fourier transform (IFFT) processing, and precoding processing, and the result is forwarded to each transmitting/receiving section 103. Furthermore, downlink control signals are also subjected to transmission processing such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

On the other hand, as for uplink (UL) signals, radio frequency signals that are received in the transmitting/receiving antennas 101 are amplified in the amplifying sections 102. The transmitting/receiving sections 103 receive the UL signals amplified in the amplifying sections 102. The transmitting/receiving sections 103 convert the received signals into the baseband signal through frequency conversion and outputs to the baseband signal processing section 104.

In the baseband signal processing section 104, UL data that is included in the UL signals that are input is subjected to fast Fourier transform (FFT) processing, inverse discrete Fourier transform (IDFT) processing, error correction decoding, MAC retransmission control receiving processing, and RLC layer and PDCP layer receiving processing, and forwarded to the higher station apparatus 30 via the communication path interface 106. The call processing section 105 performs call processing such as setting up and releasing for communication channels, manages the state of the radio base station 10, manages the radio resources and so on.

The communication path interface 106 transmits and/or receives signals to and/or from the higher station apparatus 30 via a certain interface. The communication path interface 106 may transmit and/or receive signals (backhaul signaling) with neighbor radio base stations 10 via an inter-base station interface (for example, an optical fiber in compliance with the CPRI (Common Public Radio Interface) and an X2 interface).

The transmitting/receiving sections 103 transmit a downlink (DL) signal (including at least one of a DL data signal, a DL control signal, and a DL reference signal) to the user terminal 20, and receive an uplink (UL) signal (including at least one of an UL data signal, an UL control signal, and an UL reference signal) from the user terminal 20.

The transmitting/receiving sections 103 use the downlink control channel to transmit the DCI to the user terminal 20. In addition, the transmitting/receiving sections 103 may transmit control information (higher layer control information) through higher layer signaling. The transmitting/receiving sections 103 may use the downlink shared channel to transmit data (transport blocks (TBs)) to the user terminal 20, and use the uplink shared channel to receive data (TBs) from the user terminal 20.

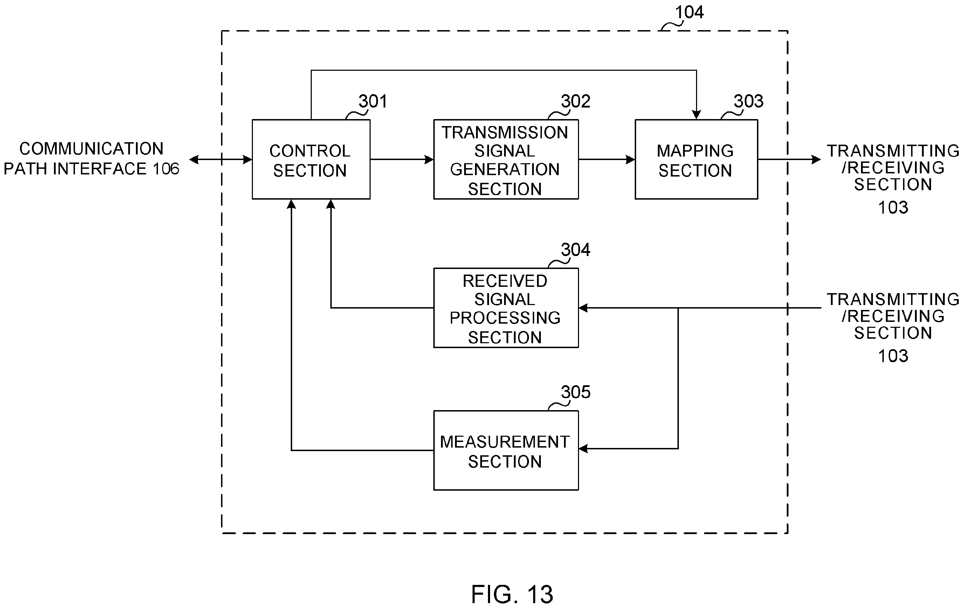

FIG. 13 is a diagram to show an example of a functional structure of the radio base station according to the present embodiment. Note that FIG. 13 primarily shows functional blocks that pertain to characteristic parts of the present embodiment, and it is assumed that the radio base station 10 may include other functional blocks that are necessary for radio communication as well. As shown in FIG. 13, the baseband signal processing section 104 includes a control section 301, a transmission signal generation section 302, a mapping section 303, a received signal processing section 304, and a measurement section 305.

The control section 301 controls the whole of the radio base station 10. The control section 301, for example, controls the generation of DL signals in the transmission signal generation section 302, the mapping of DL signals by the mapping section 303, reception processing (for example, demodulation and so on) of UL signals by the received signal processing section 304, and measurements by the measurement section 305.

Specifically, the control section 301 schedules the user terminal 20. Specifically, the control section 301 may perform scheduling and/or retransmission control of the downlink shared channel and/or the uplink shared channel.

The control section 301 may control generation of DCI. The DCI (DL assignment) used for scheduling of the downlink shared channel may include information indicating the MCS index and the number of PRBs allocated to the downlink shared channel. The DCI (UL grant) used for scheduling of the uplink shared channel may include information indicating the MCS index and the number of PRBs allocated to the downlink shared channel.

The control section 301 may control at least one of transmission of transport blocks (TBs) using the downlink shared channel and reception of TBs using the uplink shared channel.

The control section 301 determines the TBS. Specifically, the control section 301 may reference the MCS table (FIG. 2A) to determine the coding rate and the modulation order corresponding to the MCS index included in the DCI to determine the TBS by using, for example, steps 1) to 4) described above.

Based on the index (for example, the MCS index) included in the DCI and the number of resource blocks of the downlink shared channel or the uplink shared channel scheduled by the DCI, the control section 301 may determine the transport block size (TBS) for the specific packet received by using the downlink shared channel or transmitted by using the uplink shared channel.

The control section 301 may use the table specifying a TBS corresponding to the index and the number of resource blocks to determine the TBS for the specific packet (first aspect).

The control section 301 may control the size of the specific packet, based on the determined TBS (second aspect).

The control section 301 may adjust the determined TBS based on the number of bits in the specific packet (third aspect).

The control section 301 can be constituted with a controller, a control circuit or control apparatus that can be described based on general understanding of the technical field to which the present invention pertains.

The transmission signal generation section 302 generates DL signals (including DL data signals, DL control signals, and DL reference signals), based on commands from the control section 301 and outputs the DL signals to the mapping section 303.

The transmission signal generation section 302 can be constituted with a signal generator, a signal generation circuit or signal generation apparatus that can be described based on general understanding of the technical field to which the present invention pertains.

The mapping section 303 maps the DL signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processing (for example, demapping, demodulation, decoding and so on) on UL signals (including, for example, UL data signals, UL control signals, and UL reference signals) transmitted from the user terminal 20. Specifically, the received signal processing section 304 may output the received signals and/or the signals after the receiving processing to the measurement section 305. The received signal processing section 304 executes reception processing of the UCI, based on an uplink control channel configuration indicated by the control section 301.

The measurement section 305 conducts measurements with respect to the received signals. The measurement section 305 can be constituted with a measurer, a measurement circuit or measurement apparatus that can be described based on general understanding of the technical field to which the present invention pertains.

The measurement section 305 may measure the channel quality of the UL, based on, for example, the received power (for example, RSRP (Reference Signal Received Power) and/or received quality (for example, RSRQ (Reference Signal Received Quality) of the UL reference signal. The measurement results may be output to the control section 301.

<User Terminal>

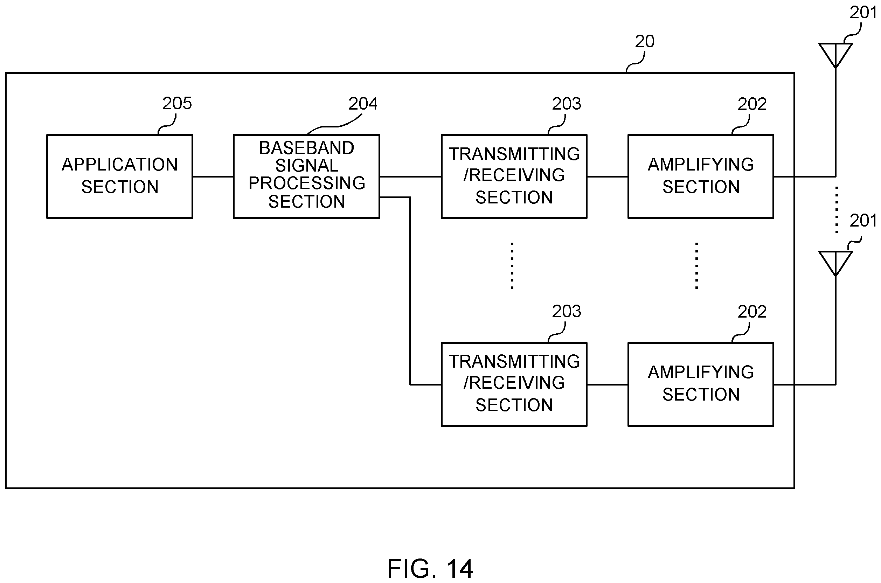

FIG. 14 is a diagram to show an example of an overall structure of the user terminal according to the present embodiment. A user terminal 20 includes a plurality of transmitting/receiving antennas 201, amplifying sections 202, transmitting/receiving sections 203, a baseband signal processing section 204, and an application section 205 for MIMO transmission.

Radio frequency signals that are received in the plurality of transmitting/receiving antennas 201 are respectively amplified in the amplifying sections 202. The transmitting/receiving sections 203 receive the DL signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, FFT processing, error correction decoding, retransmission control receiving processing, and so on. The DL data is forwarded to the application section 205. The application section 205 performs processing related to higher layers above the physical layer and the MAC layer, and so on. Broadcast information is also forwarded to the application section 205.

On the other hand, the uplink (UL) data is input from the application section 205 to the baseband signal processing section 204. The baseband signal processing section 204 performs a retransmission control transmission processing (for example, HARQ transmission processing), channel coding, rate matching, puncturing, discrete Fourier transform (DFT) processing, IFFT processing, and so on, and the result is forwarded to the transmitting/receiving section 203. The UCI is also subjected to at least one of channel coding, rate matching, puncturing, DFT processing, and IFFT processing, and the result is forwarded to the transmitting/receiving sections 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive downlink (DL) signals (including DL data signals, DL control signals, and DL reference signals) with numerologies configured in the user terminal 20, and transmit uplink (UL) signals (including UL data signals, UL control signals, and UL reference signals) with the numerologies.

The transmitting/receiving sections 203 use the downlink control channel to receive the DCI for the user terminal 20. In addition, the transmitting/receiving sections 203 may receive control information (higher layer control information) through higher layer signaling. The transmitting/receiving sections 203 may use the downlink shared channel to receive data (transport blocks (TBs)) for the user terminal 20, and use the uplink shared channel to transmit data (TBs) obtained from the user terminal 20.

The transmitting/receiving sections 203 can be constituted with transmitters/receivers, transmitting/receiving circuits or transmitting/receiving apparatus that can be described based on general understanding of the technical field to which the present invention pertains. The transmitting/receiving section 203 may be structured as a transmitting/receiving section in one entity, or may be constituted with a transmitting section and a receiving section.

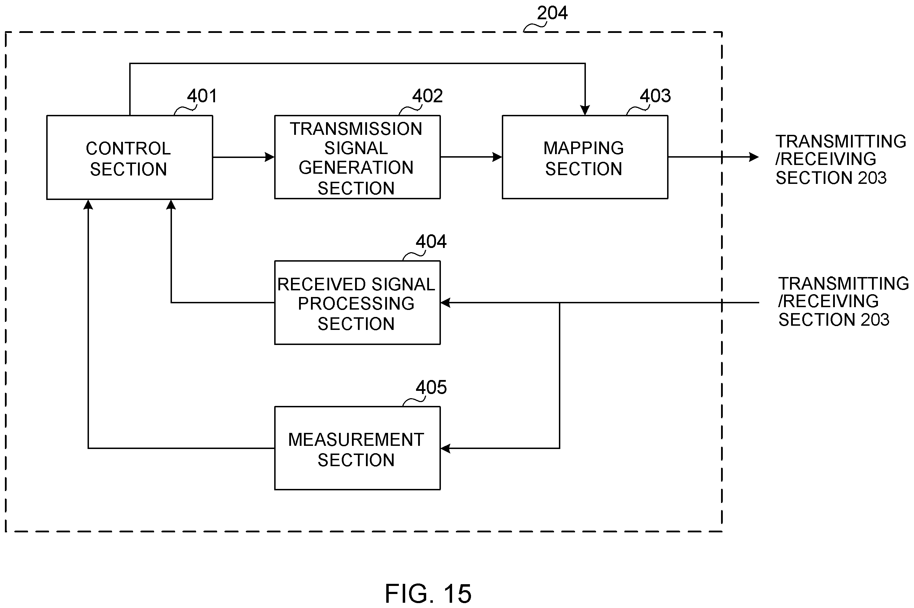

FIG. 15 is a diagram to show an example of a functional structure of the user terminal according to the present embodiment. Note that FIG. 15 primarily shows functional blocks that pertain to characteristic parts of the present embodiment, and it is assumed that the user terminal 20 may include other functional blocks that are necessary for radio communication as well. As shown in FIG. 15, the baseband signal processing section 204 included in the user terminal 20 includes a control section 401, a transmission signal generation section 402, a mapping section 403, a received signal processing section 404 and a measurement section 405.

The control section 401 controls the whole of the user terminal 20. The control section 401, for example, controls the generation of UL signals by the transmission signal generation section 402, the mapping of UL signals by the mapping section 403, reception processing of DL signals by the received signal processing section 404, and measurements by the measurement section 405.

The control section 401 may control at least one of transmission of transport blocks (TBs) using the downlink shared channel and reception of TBs using the uplink shared channel, based on the DCI.

The control section 401 determines the TBS. Specifically, the control section 401 may reference the MCS table (FIG. 2A) to determine the coding rate and the modulation order corresponding to the MCS index included in the DCI to determine the TBS by using, for example, steps 1) to 4) described above.

Based on the index (for example, the MCS index) included in the DCI and the number of resource blocks of the downlink shared channel or the uplink shared channel scheduled by the DCI, the control section 401 may determine the transport block size (TBS) for the specific packet received by using the downlink shared channel or transmitted by using the uplink shared channel.

The control section 401 may use the table specifying the TBS corresponding to the index and the number of resource blocks to determine the TBS for the specific packet (first aspect).

The control section 401 may control the size of the specific packet, based on the determined TBS (second aspect).

The control section 401 may adjust the determined TBS based on the number of bits in the specific packet (third aspect).

The control section 401 can be constituted with a controller, a control circuit or control apparatus that can be described based on general understanding of the technical field to which the present invention pertains.

The transmission signal generation section 402 generates (for example, perform coding, rate matching, puncturing, modulation, and so on) UL signals (including UL data signals, UL control signals, UL reference signals, and UCI), based on commands from the control section 401 and outputs the UL signals to the mapping section 403. The transmission signal generation section 402 can be constituted with a signal generator, a signal generation circuit or signal generation apparatus that can be described based on general understanding of the technical field to which the present invention pertains.

The mapping section 403 maps the UL signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present invention pertains.

The received signal processing section 404 performs receiving processing (for example, demapping, demodulation, decoding, and so on) on DL signals (DL data signals, scheduling information, DL control signals, and DL reference signals). The received signal processing section 404 outputs, to the control section 401, the information received from the radio base station 10. The received signal processing section 404 outputs, to the control section 401, for example, broadcast information, system information, higher layer control information provided through higher layer signaling such as RRC signaling, physical layer control information (L1/L2 control information), and so on.

The received signal processing section 404 can be constituted with a signal processor, a signal processing circuit or signal processing apparatus that can be described based on general understanding of the technical field to which the present invention pertains. Additionally, the received signal processing section 404 can constitute the receiving section according to the present invention.

The measurement section 405 measures the channel state, based on a reference signal (for example, CSI-RS) from the radio base station 10, and outputs a measurement result to the control section 401. Note that the measurement of the channel state may be performed for each CC.

The measurement section 405 can be constituted with a signal processor, a signal processing circuit or signal processing apparatus, and with a measurer, a measurement circuit or measurement apparatus that can be described based on general understanding of the technical field to which the present invention pertains.

<Hardware Structure>

Note that the block diagrams that have been used to describe the above embodiments show blocks in functional units. These functional blocks (components) may be implemented in arbitrary combinations of hardware and/or software.

Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

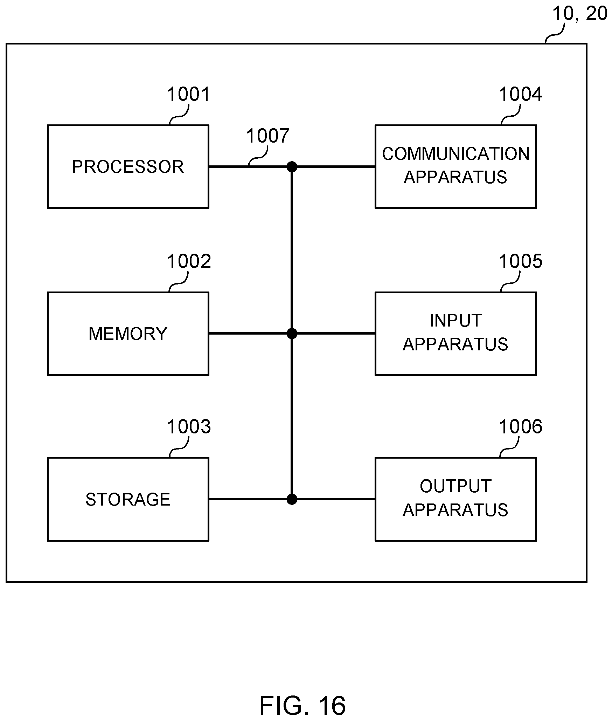

For example, a radio base station, a user terminal, and so on according to one embodiment of the present invention may function as a computer that executes the processing of the radio communication method of the present invention. FIG. 16 is a diagram to show an example of a hardware structure of the radio base station and the user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of the respective apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

(Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification may be used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "transmission/reception point (TRP)," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

The base station and/or the mobile station may be referred to as a "transmitting apparatus," a "receiving apparatus," and so on.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other."

The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. the present invention can be implemented with various corrections and in various modifications, without departing from the gist and scope of the invention defined by the recitations of claims. Consequently, the description in this specification is provided only for the purpose of explaining examples, and should by no means be construed to limit the present invention in any way.

**Claims**

1. A user terminal comprising:

   a receiving section that receives downlink control information (DCI); and
   a control section that determines, based on an index included in the DCI and a number of resource blocks for a downlink shared channel or an uplink shared channel scheduled by the DCI, a transport block size (TBS) for a specific packet received by using the downlink shared channel or transmitted by using the uplink shared channel.

2. The user terminal according to claim 1, wherein
   the control section uses a table specifying a TBS corresponding to the index and the number of resource blocks to determine the TBS for the specific packet.

3. The user terminal according to claim 2, wherein
   the table is a single table specifying one or more TBSs corresponding to the index and the number of resource blocks, and
   the control section determines the TBS for the specific packet based on a certain parameter, out of the one or more TBSs.

4. The user terminal according to claim 2, wherein
   the table includes a plurality of tables specifying an identical TBS or different TBSs corresponding to the index and the number of resource blocks, and
   the control section determines the TBS for the specific packet by using a table selected from the plurality of tables based on a certain parameter.

5. The user terminal according to claim 1, wherein
   the control section controls a size of the specific packet based on the determined TBS or adjusts the determined TBS based on a number of bits in the specific packet.

6. A radio base station comprising:

   a transmitting section that transmits downlink control information (DCI); and
   a control section that determines, based on an index included in the DCI and a number of resource blocks for a downlink shared channel or an uplink shared channel scheduled by the DCI, a transport block size (TBS) for a specific packet transmitted by using the downlink shared channel or received by using the uplink shared channel.

FIG. 1A

| MCS Index $I_{\text{MCS}}$ | Modulation Order $Q_m$ | TBS Index $I_{\text{TBS}}$ |
|:---:|:---:|:---:|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |

⋮

FIG. 1B

| $I_{\text{TBS}}$ | $N_{\text{PRB}}$ | | | | | | | |
|:---:|:---:|:---:|:---:|:---:|:---:|:---:|:---:|:---:|
| | 1 | 2 | 3 | 4 | 5 | 6 | 7 | ⋯ |
| 0 | 16 | 32 | 56 | 88 | 120 | 152 | 176 | |
| 1 | 24 | 56 | 88 | 144 | 176 | 208 | 224 | |
| 2 | 32 | 72 | 144 | 176 | 208 | 256 | 296 | |
| 3 | 40 | 104 | 176 | 208 | 256 | 328 | 392 | |
| 4 | 56 | 120 | 208 | 256 | 328 | 408 | 488 | |
| 5 | 72 | 144 | 224 | 328 | 424 | 504 | 600 | |
| 6 | 328 | 176 | 256 | 392 | 504 | 600 | 712 | |
| 7 | 104 | 224 | 328 | 472 | 584 | 712 | 840 | |
| 8 | 120 | 256 | 392 | 536 | 680 | 808 | 968 | |
| 9 | 136 | 296 | 456 | 616 | 776 | 936 | 1096 | |

⋮

| MCS Index $I_{MCS}$ | Modulation Order $Q_m$ | Target code Rate x [1024] $R$ | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| … | … | … | … |
| 28 | 6 | 948 | 5.5547 |
| 29 | 2 | reserved | |
| 30 | 4 | reserved | |
| 31 | 6 | reserved | |

# FIG. 2

| Index | TBS | Index | TBS | Index | TBS | Index | TBS |
|-------|-----|-------|-----|-------|-----|-------|------|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

# FIG. 3

## FIG. 4A

COVERAGE
(TBS=328)

COVERAGE
(TBS=336)

gNB

X

UE

## FIG. 4B

| $I_{MCS}$ | $N_{PRB}$ | | | |
|---|---|---|---|---|
| | 1 | 2 | 3 | ... |
| 0 | 32 | 64 | 96 | ... |
| 1 | 40 | 88 | 128 | ... |
| 2 | 48 | 104 | 160 | ... |
| 3 | 64 | 136 | 208 | ... |
| ... | ... | ... | ... | ... |

EP 3 780 720 A1

FIG. 5A

FIG. 5B

Legend:
- - - → PDCCH
——→ PDSCH
-·-→ PUCCH

| $I_{MCS}$ | $N_{PRB}$ | | | | | | | |
|---|---|---|---|---|---|---|---|---|
| | 1 | 2 | 3 | 4 | 5 | 6 | 7 | ... |
| 0 | 16 | 32 | 56 | 88 | 120 | 152 | 176 | |
| 1 | 24 | 56 | 88 | 144 | 176 | 208 | 224 | |
| 2 | 32 | 72 | 144 | 176 | 208 | 256 | 296 | |
| 3 | 40 | 104 | 176 | 208 | 256 | 328 | 392 | |
| 4 | 56 | 120 | 208 | 256 | 328 | 408 | 488 | |
| 5 | 72 | 144 | 224 | 328 | 424 | 504 | 600 | |
| 6 | 328 | 176 | 256 | 392 | 504 | 600 | 712 | |
| 7 | 104 | 224 | 328 | 472 | 584 | 712 | 840 | |
| 8 | 120 | 256 | 392 | 536 | 680 | 808 | 968 | |
| 9 | 136 | 296 | 456 | 616 | 776 | 936 | 1096 | |

⋮

# FIG. 6

| $I_{MCS}$ | $N_{PRB}$ | | | |
|---|---|---|---|---|
| | 1 | 2 | ... | X |
| 0 | 32 | 64 | ... | xx |
| 1 | 32+8X | $\alpha$ =0 : 64<br>$\alpha$ =1 : 88 | ... | ... |
| ... | ... | ... | ... | ... |
| 31 | 808 | 1608 | ... | xxx |

FIG. 7

FIG.
8A

| $I_{MCS}$ | $N_{PRB}$ | | | |
|---|---|---|---|---|
| | 1 | 2 | ⋯ | X |
| 0 | 32 | 64 | ⋯ | xx |
| 1 | 32+8X | 64 | ⋯ | ⋯ |
| ⋯ | ⋯ | ⋯ | ⋯ | ⋯ |
| 31 | 808 | 1608 | ⋯ | xxx |

FIG. 8B

| $I_{MCS}$ | $N_{PRB}$ | | | |
|---|---|---|---|---|
| | 1 | 2 | ⋯ | X |
| 0 | 32 | 64 | ⋯ | xx |
| 1 | 32+8X | 88 | ⋯ | ⋯ |
| ⋯ | ⋯ | ⋯ | ⋯ | ⋯ |
| 31 | 808 | 1608 | ⋯ | xxx |

FIG. 9A

TB WITH TBS COMPUTED BY CURRENT PROCEDURE

VoIP PACKET

FIG. 9B

TB WITH TBS COMPUTED BY CURRENT PROCEDURE

VoIP PACKET

0s

## FIG. 10A

| |
|---|
| TB WITH TBS COMPUTED BY CURRENT PROCEDURE |

| |
|---|
| VoIP PACKET |

## FIG. 10B

| |
|---|
| TB WITH TBS COMPUTED BY CURRENT PROCEDURE |

| |
|---|
| VoIP PACKET |

EP 3 780 720 A1

40

CORE NETWORK

30

HIGHER STATION
APPARATUS

1

C1

11

12a

12c

C2

C2

BACKHAUL
LINK

C2

20

12b

FIG. 11

FIG. 12

TO HIGHER STATION APPARATUS 30 OR TO OTHER RADIO BASE STATIONS 10

106 COMMUNICATION PATH INTERFACE

104 BASEBAND SIGNAL PROCESSING SECTION

105 CALL PROCESSING SECTION

103 TRANSMITTING /RECEIVING SECTION

103 TRANSMITTING /RECEIVING SECTION

102 AMPLIFYING SECTION

102 AMPLIFYING SECTION

10

101

101

101

EP 3 780 720 A1

FIG. 13

COMMUNICATION PATH INTERFACE 106

CONTROL SECTION 301

TRANSMISSION SIGNAL GENERATION SECTION 302

MAPPING SECTION 303

RECEIVED SIGNAL PROCESSING SECTION 304

MEASUREMENT SECTION 305

104

TRANSMITTING /RECEIVING SECTION 103

TRANSMITTING /RECEIVING SECTION 103

FIG. 14

EP 3 780 720 A1

204

401 CONTROL SECTION

402 TRANSMISSION SIGNAL GENERATION SECTION

403 MAPPING SECTION

404 RECEIVED SIGNAL PROCESSING SECTION

405 MEASUREMENT SECTION

TRANSMITTING /RECEIVING SECTION 203

TRANSMITTING /RECEIVING SECTION 203

FIG. 15

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 16

## INTERNATIONAL SEARCH REPORT

| International application No. |
|---|
| PCT/JP2018/014641 |

A.    CLASSIFICATION OF SUBJECT MATTER
Int.Cl. H04W28/06(2009.01)i, H04W72/04(2009.01)i

According to International Patent Classification (IPC) or to both national classification and IPC

B.    FIELDS SEARCHED

Minimum documentation searched (classification system followed by classification symbols)
Int.Cl. H04W4/00-99/00

Documentation searched other than minimum documentation to the extent that such documents are included in the fields searched
       Published examined utility model applications of Japan       1922-1996
       Published unexamined utility model applications of Japan     1971-2018
       Registered utility model specifications of Japan             1996-2018
       Published registered utility model applications of Japan     1994-2018

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| X<br>A | JP 2016-067030 A (NTT DOCOMO, INC.) 28 April 2016,<br>paragraphs [0011]-[0023], fig. 3, 4<br>& US 2015/0365181 A1, paragraphs [0053]-[0066],<br>fig. 3, 4 & CN 104956723 A | 1, 2, 6<br>3, 4, 5 |
| X<br>A | NTT DOCOMO, TBS determination, 3GPP TSG RAN WG1<br>Meeting AH 1801 R1-1802491, 3GPP, 17 February<br>2018, pp. 1-4 | 1, 2, 6<br>3, 4, 5 |
| A | HUAWEI, HISILICON, Draft CR on TBS in TS38.214,<br>3GPP TSG RAN WG1 Meeting #92 R1-1802707, 3GPP, 17<br>February 2018, pp. 1-5 | 1-6 |

☐    Further documents are listed in the continuation of Box C.     ☐    See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
|        12.06.2018 |        19.06.2018 |

| Name and mailing address of the ISA/ | Authorized officer |
|---|---|
|    Japan Patent Office<br>    3-4-3, Kasumigaseki, Chiyoda-ku,<br>    Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010